# EUROPÄISCHE PATENTSCHRIFT

(11) **EP 3 219 514 B1**
(45) Veröffentlichungstag und Bekanntmachung des Hinweises auf die Patenterteilung: **20.02.2019**
(21) Anmeldenummer: 16206033.9
(22) Anmeldetag: 22.12.2016
(51) Int. Cl.: B60C 11/13, B60C 11/04

(54) **FAHRZEUGLUFTREIFEN**
PNEUMATIC TYRES FOR A VEHICLE
PNEUMATIQUES DE VÉHICULE

(30) Priorität: 18.03.2016 DE 102016204576
(43) Veröffentlichungstag der Anmeldung: 20.09.2017
(73) Patentinhaber: Continental Reifen Deutschland GmbH, 30165 Hannover (DE)
(72) Erfinder: Özüduru, Ahmet, 30419 Hannover (DE); Röger, Bernhard, 30823 Garbsen (DE); Robelo, Marco, 30159 Hannover (DE)
(74) Vertreter: Finger, Karsten

(56) Entgegenhaltungen:
- EP-A2- 3 015 287
- JP-A- H0 195 910
- JP-A- H02 212 203
- US-A1- 2007 240 801
- US-A1- 2011 226 398

## Beschreibung

Die Erfindung betrifft ein Laufstreifenprofil eines Fahrzeugreifens mit wenigstens zwei axial nebeneinander angeordneten Profilbändern die durch eine Umfangsille voneinander getrennt sind, wobei die Umfangsrille in radialer Richtung R nach innen hin von einem Rillengrund begrenzt ist und wobei das Profilband in radialer Richtung R nach außen hin durch eine die Bodenkontaktfläche bildende, radial äußere Oberfläche und in axialer Richtung A zur Umfangsrille hin durch eine eine Rillenwand der Umfangsrille bildende Profilbandflanke begrenzt ist, welche sich ausgehend vom Rillengrund in radialer Richtung R nach außen bis zur radial äußeren Oberfläche und entlang der Umfangsrille in Umfangsrichtung U erstreckt, wobei die Profilbandflanke längs ihrer Erstreckung in Umfangsrichtung U mit mehreren jeweils hintereinander angeordneten Einbuchtungen ausgebildet ist, welche jeweils aus mehreren - insbesondere zwei - in Umfangsrichtung U unmittelbar hintereinander ausgebildeten Flankenabschnitten ausgebildet sind, die sich längs ihrer radialen Erstreckung ausgehend von der radial äußeren Oberfläche nach innen hin v-förmig schneiden, wobei die erste Flanke die Einbuchtung zur einen Drehrichtung des Reifens hin und die zweite Flanke die Einbuchtung zur anderen Drehrichtung des Reifens hin begrenzt, wobei in der radial äußeren Oberfläche die erste Flanke den ersten Schenkel der Schenkellänge a und die zweite Flanke den zweiten Schenkel der Schenkellänge b der V-Form bildet, wobei der zweite Schenkel in seiner Ausrichtung mit einer größeren Umfangsrichtungskomponente als der erste Schenkel und a < b ausgebildet ist.

Derartige Fahrzeugluftreifen sind bekannt. Der Schneegriff eines Fahrzeugluftreifens wird durch mehrere Effekte wie zum Beispiel die Schnee-Schnee-Reibung oder auch die Mikroreibung zwischen Oberfläche und glatter Straße beeinflusst. Ein weiterer besonders wichtiger Effekt ist die direkte Griffwirkung durch Griffkanten im Profil. Hierzu ist es wünschenswert, besonders viele wirksame Griffkanten im Laufstreifenprofil eines Fahrzeugluftreifens auszubilden.

Es ist bekannt, ein Laufstreifenprofil eines Fahrzeugluftreifens zur Übertragung der für gute Handling-Eigenschaften wichtigen seitlichen Kräfte und für Traktions- und Bremseigenschaften auf trockener Straße mit Hilfe von Umfangsrippen, welche sich über den gesamten Umfang des Fahrzeugluftreifens erstrecken, mit hoher Profilsteifigkeit auszubilden.

Es ist auch bekannt, bei Fahrzeugluftreifen mit derartigen Umfangsrippen die Umfangsrippe an ihrer die Umfangsrippe zu einer angrenzenden Umfangsrille begrenzenden Rippenflanke zur Erhöhung der wirksamen Griffkanten längs ihrer Erstreckung in Umfangsrichtung mit hintereinander angeordneten V-förmigen Einbuchtungen auszubilden, so dass die Flanke längs ihrer Erstreckung einen zick-zackförmigen Verlauf aufweist. Dabei ist es bekannt, die Einbuchtung mit einer in Umfangsrichtung kürzer erstreckten Flanke und mit einer in Umfangsrichtung länger erstreckten Flanke auszubilden. Eine derartige Ausbildung ermöglicht durch die Zick-Zackform mit unterschiedlich lang ausgebildeten Flanken einen verbesserten Schnee- bzw. Matschgriff. Eine derartige Ausbildung ist aus der EP2767415A2 bekannt.

Wird die Tiefe der Einbuchtung und somit die Amplitude der Zackenform erhöht oder die Frequenz der hintereinander angeordneten Zacken erhöht, könnte hierdurch zwar die Zahl der Griffkanten bzw. die wirksame Griffkantenlänge weiter erhöht werden, was sich weiter positiv auf Matsch- und Schneegriff auswirken könnte. Allerdings wird mit zunehmender Tiefe der Einbuchtung in die Umfangsrippe hinein und somit durch eine zunehmende Größe der Amplitude der Zackenform oder auch durch Erhöhung der Zackenfrequenz die Steifigkeit der Umfangrippe deutlich verringert, wodurch die Handlingeigenschaften, aber auch Traktions- und Bremseigenschaften negativ beeinflusst würden.

Somit ist die Ausbildung derartiger Profile mit Umfangsrippen mit zick-zackförmigem Verlauf der Rippenflanke in ihren Möglichkeiten der Umsetzung begrenzt. Eine weitere Verbesserung des Schnee- und Matschgriffes durch Vertiefung der Einbuchtungen oder durch Erhöhung der Frequenz der Zacken erfolgt unter Inkaufnahme von Nachteilen hinsichtlich Traktion und Handling oder aber die Ausbildung erfolgt nur mit geringer Tiefe der Ausbuchtungen und mit geringer Frequenz der Zacken zur Sicherstellung guter Traktions- und Handlingeigenschaften auf trockener Straße unter Inkaufnahme der Nachteile hinsichtlich des Schnee- und Matschgriffs.

Aus der gattungsgemäßen DE 10 2007 016 113 A1 ist es bekannt, Rippen eines Laufstreifenprofiles mit Flanken auszubilden, die einen zick-zackförmigen Verlauf aufweisen, wobei die kürzere Flanke der Zick-Zackform längs ihrer radialen Erstreckung einen treppenförmigen Verlauf aufweist, wobei längs der gesamten radialen Erstreckung von radial außen nach radial innen hin der Neigungsverlauf der einzelnen Treppenabschnitte jeweils in die gleiche Drehrichtung des Reifens weist. Durch diese Ausbildung soll ermöglicht werden, dass beim Abrollen des Reifens auf Schnee der Schnee längs der Treppenform in das Profilinnere hineingepresst wird und dann entlang der Treppenform wieder besser aus dem Footprint herausgeworfen werden kann. Hierdurch kann eventuell durch das Einpressen die Schnee-Schnee-Reibung verbessert werden. Zusätzliche Griffkanten werden hierdurch nicht geschaffen.

Somit liegt der Erfindung die Aufgabe zugrunde, ein Laufstreifenprofil eines Fahrzeugluftreifens zu ermöglichen, mit welchem der Zielkonflikt einer guten Profilsteifigkeit für gute Traktions- und Handlingeigenschaften mit weiter verbesserten Schnee- und Matschgriffeigenschaften besser gelöst werden kann.

Die Aufgabe wird erfindungsgemäß durch die Ausbildung eines Laufstreifenprofils eines Fahrzeugreifens mit wenigstens zwei axial nebeneinander angeordneten Profilbändern die durch eine Umfangsille voneinander getrennt sind, wobei die Umfangsrille in radialer Richtung R nach innen hin von einem Rillengrund begrenzt ist und wobei das Profilband in radialer Richtung R nach außen hin durch eine die Bodenkontaktfläche bildende, radial äußere Oberfläche und in axialer Richtung A zur Umfangsrille hin durch eine eine Rillenwand der Umfangsrille bildende Profilbandflanke begrenzt ist, welche sich ausgehend vom Rillengrund in radialer Richtung R nach außen bis zur radial äußeren Oberfläche und entlang der Umfangsrille in Umfangsrichtung U erstreckt, wobei die Profilbandflanke längs ihrer Erstreckung in Umfangsrichtung U mit mehreren jeweils hintereinander angeordneten Einbuchtungen ausgebildet ist, welche jeweils aus mehreren - insbesondere zwei - in Umfangsrichtung U unmittelbar hintereinander ausgebildeten Flankenabschnitten ausgebildet sind, die sich längs ihrer radialen Erstreckung ausgehend von der radial äußeren Oberfläche nach innen hin v-förmig schneiden, wobei die erste Flanke die Einbuchtung zur einen Drehrichtung des Reifens hin und die zweite Flanke die Einbuchtung zur anderen Drehrichtung des Reifens hin begrenzt, wobei in der radial äußeren Oberfläche die erste Flanke den ersten Schenkel der Schenkellänge a und die zweite Flanke den zweiten Schenkel der Schenkellänge b der V-Form bildet, wobei der zweite Schenkel in seiner Ausrichtung mit einer größeren Umfangsrichtungskomponente als der erste Schenkel und a < b ausgebildet ist, gemäß den Merkmalen von Anspruch 1 gelöst, bei dem die erste Flanke in senkrecht zum ersten Schenkel gebildeten Schnittebenen längs ihrer radialen Erstreckung von der radial äußeren Oberfläche nach innen hin zumindest abschnittsweise mit zickzackförmiger Schnittkontur mit alternierend angeordneten ersten und zweiten Abschnitten ausgebildet ist, wobei die Schnittkontur längs ihrer radialen Erstreckung von außen nach innen hin in den ersten Abschnitten eine entgegengesetzte Neigungsrichtung aufweist wie in den zweiten Abschnitten, und bei dem die zweite Flanke in den senkrecht zum zweiten Schenkel in der radial äußeren Oberfläche gebildeten Schnittebenen längs ihrer radialen Erstreckung von der radial äußeren Oberfläche nach innen hin mit einem stetigen Konturverlauf ausgebildet ist.

Durch diese Ausbildung wird es ermöglicht, dass das Profilband mit Hilfe der Einbuchtungen weiterhin schon gute Matsch- und Schneegriffeigenschaften ermöglichen kann, wobei diese durch die zusätzliche zick-zackförmige Ausbildung der ersten Flanke längs deren radialer Erstreckung in einfacher Weise noch mit weiteren zusätzliche Griffkanten ausgebildet wird, die die Griffwirkung auf Schnee und Matsch weiter verbessern. Hierdurch kann ohne die Einbuchtungen in ihrer in das Profilband hineinreichenden Tiefe und ohne die Zahl der Einbuchtungen und somit die Frequenz der Zackenzahl des Konturverlaufs längs der Erstreckung des Profilbandes weiter zu erhöhen die Zahl der wirksamen Griffkanten deutlich erhöht werden und das Laufstreifenprofil mit erhöhter wirksamer Griffkantenlänge ausgebildet werden, wodurch Matsch- und Schneegriff zusätzlich verbessert werden können. Die Steifigkeit des Profilbandes wird hierdurch nicht weiter beeinträchtigt. Somit kann Matsch- und Schneegriff in einfacher Weise verbessert werden, ohne die Traktions- und Bremseigenschaften zu beeinträchtigen.

Besonders vorteilhaft ist die Ausbildung eines Fahrzeugreifens gemäß den Merkmalen von Anspruch 2, wobei die Schnittkontur in den zweiten Abschnitten eine größere radiale Erstreckung aufweist als in den ersten Abschnitten, und wobei die Schnittkontur in den zweiten Abschnitten längs ihrer radialen Erstreckung von innen nach außen hin unter Einschluss eines Neigungswinkels ε zur Radialen R jeweils mit zum Profilband hin orientierter Neigungsrichtung und in den ersten Abschnitten längs ihrer radialen Erstreckung von innen nach außen hin unter Einschluss eines Neigungswinkels γ zur Radialen R jeweils mit zum Profilband hin orientierter Neigungsrichtung ausgebildet ist mit γ > ε. Hierdurch kann in einfacher Weise die Ausbildung von Hinterschnitten reduziert und die Entformbarkeit aus der Vulkanisationsform optimiert werden. Dabei kann eine scharfkantige Ausbildung der Verzahnung einfach vermieden und Steinfangeffekte reduziert werden.

Besonders vorteilhaft ist die Ausbildung eines Fahrzeugreifens gemäß den Merkmalen von Anspruch 3, wobei ε mit 0°<ε≤45° ausgebildet ist. Hierdurch kann in einfacher Weise die Ausbildung von Schneetaschen und eine Optimierung der Schnee-Schnee-Reibung weiter begünstigt und zusätzlich dem Steinfangen entgegengewirkt werden.

Besonders vorteilhaft ist die Ausbildung eines Fahrzeugreifens gemäß den Merkmalen von Anspruch 4, wobei γ mit 70°≤γ<90° ausgebildet ist. Hierdurch kann in einfacher Weise die Ausbildung von Schneetaschen und eine Optimierung der Schnee-Schnee-Reibung weiter begünstigt und zusätzlich dem Steinfangen zusätzlich entgegengewirkt werden. Besonders vorteilhaft ist die Ausbildung eines Fahrzeugreifens gemäß den Merkmalen von Anspruch 5, wobei die in der ersten Flanke ausgebildete zickzackförmige Schnittkontur mit N jeweils aus einem ersten Abschnitt und einem anschließenden zweiten Abschnitt ausgebildeten Zacken ausgebildet, wobei N eine ganze Zahl ist mit 3≤N≤8. Die Zackenzahl ist ausreichend klein gewählt, um eine einfache Entformung aus der Vulkanisationsform zu ermöglichen, und dabei groß genug, um in einfacher Weise ausreichend wirksame Schneetaschen zur Verfügung zu stellen. Darüber hinaus kann hierdurch die Versteifung des Profilbandes weiter optimiert und die Steifigkeitsverteilung im Profilband verbessert werden.

Besonders vorteilhaft ist die Ausbildung eines Fahrzeugreifens gemäß den Merkmalen von Anspruch 6, wobei die erste Flanke ausgehend von ihrer Schnittkante mit der zweiten Flanke längs ihrer Erstreckung bis in einen Abstand d mit 0,2mm≤d≤1mm von dieser Schnittkante in den jeweils senkrecht zum ersten Schenkel in der radial äußeren Oberfläche gebildeten Schnittebenen mit stetigem Schnittkonturverlauf ausgebildet ist und im Anschluss daran bis zu ihrer Schnittkante mit der Profilbandflanke in den senkrecht zum ersten Schenkel in der radial äußeren Oberfläche gebildeten Schnittebenen längs ihrer radialen Erstreckung von der radial äußeren Oberfläche nach innen hin zumindest abschnittsweise mit zickzackförmiger Schnittkontur ausgebildet ist. Hierdurch können im Bereich der Einbuchtung auftretende Scherkräfte einfach minimiert werden.

Besonders vorteilhaft ist die Ausbildung eines Fahrzeugreifens gemäß den Merkmalen von Anspruch 7, wobei die in Umfangsrichtung benachbart hintereinander angeordneten Einbuchtungen jeweils beabstandet voneinander angeordnet sind. Dies begünstigt eine weitere Steifigkeitserhöhung des Profilbandes in U-Richtung und hierdurch weiter begünstigte Handling-eigenschaften.

Besonders vorteilhaft ist die Ausbildung eines Fahrzeugreifens gemäß den Merkmalen von Anspruch 8, wobei das Profilband eine Umfangsrippe ist.

Besonders vorteilhaft ist die Ausbildung eines Fahrzeugreifens gemäß den Merkmalen von Anspruch 9, wobei in der radial äußeren Oberfläche des Profilbandes ein Feineinschnitt ausgebildet ist, welcher in der Schnittposition des ersten Schenkels mit dem Schenkel in die Einbuchtung mündet.

Die Erfindung wird im Folgenden an Hand der in den Figuren 1 bis 5 dargestellten Ausführungsbeispiele näher erläutert. Hierin zeigen
- Fig.1: einen Umfangsabschnitt eines Laufstreifenprofils eines Fahrzeugluftreifens in Draufsicht,
- Fig.2: das Laufstreifenprofil von Fig.1 in Schnittdarstellung gemäß Schnitt II-II von Fig.1,
- Fig.3: das Laufstreifenprofil von Fig.1 in Schnittdarstellung gemäß Schnitt III-III von Fig.1,
- Fig.4: einen vergrößerten Ausschnitt des Laufstreifenprofils von Fig.1 in Draufsicht und
- Fig.5: einen Ausschnitt des Laufstreifenprofils von Fig.1 und Fig.4 in perspektivischer Darstellung zur Erläuterung der Zick-Zack-Form.

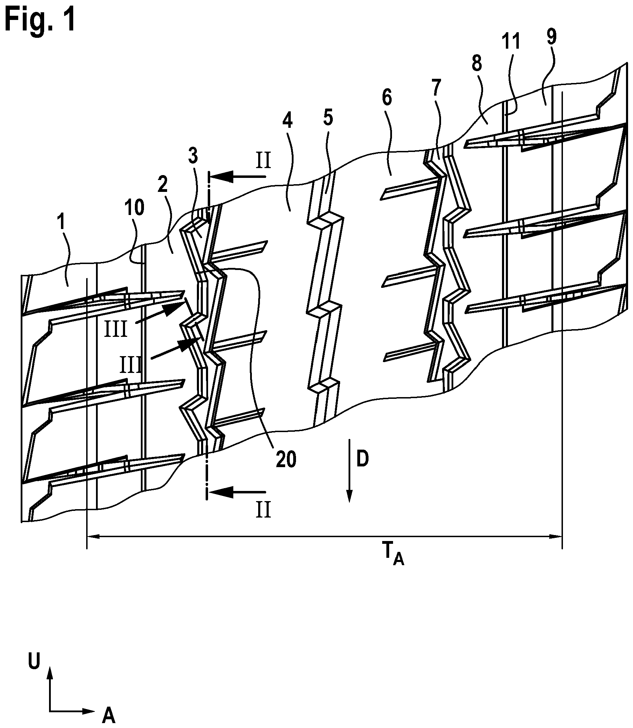

Die Figuren 1 bis 5 zeigen ein Laufstreifenprofil eines Fahrzeugluftreifens für VAN-Fahrzeuge mit mehreren in axialer Richtung A des Fahrzeugluftreifens nebeneinander angeordneten, radial erhabenen und jeweils durch Umfangsrillen 3,5,7,10,11 voneinander getrennten Profilbändern. In den beiden Reifenschultern sind dabei die axial äußeren Profilbänder jeweils als Schulterprofilblockreihen 1 bzw. 9 aus in Umfangsrichtung U des Fahrzeugluftreifens hintereinander angeordneten und jeweils durch Querrillen voneinander getrennten Profilblockelementen bekannter Art ausgebildet. Die zwischen diesen beiden Schulterblockprofilblockreihen 1 und 9 ausgebildeten Profilbänder sind im dargestellten Ausführungsbeispiel jeweils als Umfangsrippen 2, 4, 6, 8 bekannter Art ausgebildet.

Wie in Fig.1 dargestellt ist, ist axial neben der in der linken Reifenschulter ausgebildeten Schulterprofilblockreihe 1 eine über den gesamten Umfang des Fahrzeugluftreifens erstreckte und in Umfangsrichtung U ausgerichtete Umfangsrippe 2 angeordnet, die durch eine schmale Umfangsrille 10 bekannter Art von der Schulterprofilblockreihe 1 getrennt ist. Die in axialer Richtung A nebeneinander angeordneten Umfangsrippen 2 und 4 sind in bekannter Weise durch eine über den gesamten Umfang des Fahrzeugluftreifens erstreckte und in Umfangsrichtung U des Fahrzeugluftreifens ausgerichtete Umfangsrille 3 voneinander getrennt. Die beiden zentralen, ebenfalls über den Umfang des Fahrzeugluftreifens erstreckten und in Umfangsrichtung U ausgerichteten Umfangsrippen 4 und 6 sind in axialer Richtung A durch eine zentrale Umfangsrille 5 bekannter Art voneinander getrennt. Die Umfangsrippe 6 ist von der über den gesamten Umfang des Fahrzeugluftreifens erstreckten und in Umfangsrichtung U des Fahrzeugluftreifens ausgerichteten Umfangsrippe 8 in axialer Richtung A durch eine über den gesamten Umfang des Fahrzeugluftreifens erstreckte und in Umfangsrichtung U des Fahrzeugluftreifens ausgerichtete Umfangsrille 7 voneinander getrennt. Die Umfangsrippe 8 ist von der Schulterprofilblockreihe 19 durch eine über den gesamten Umfang des Fahrzeugluftreifens erstreckte und in Umfangsrichtung U ausgerichtete schmale Umfangsrille 11 voneinander getrennt. Die Umfangsrillen 3, 5 und 7 sind deutlich breiter ausgebildet als die Umfangsrillen 10 und 11.

Wie in Fig. 1 dargestellt ist, erstreckt sich die Bodenaufstandsbreite T_{A} des Fahrzeugluftreifens aus einer axialen Position im Bereich der Schulterprofilblockreihe 1 bis in eine axiale Position in der Schulterprofilblockreihe 19. In Fig.1 ist die Drehrichtung D des Fahrzeugluftreifens bei Vorwärtsfahrt mit einem Pfeil dargestellt.

Die Umfangsrillen 10 und 11 sind längs ihrer Erstreckung in Umfangsrichtung U geradlinig erstreckt ausgebildet. Die Umfangsrille 5 ist längs ihrer Erstreckung in Umfangsrichtung U zick-zack-förmig verlaufend ausgebildet.

Die Umfangsrippen 2, 4, 6 und 8 sowie die Profilblockelemente der Schulterprofilblockreihen 1 und 19 sind innerhalb des axialen Erstreckungsbereichs der Bodenaufstandsbreite T_{A} in radialer Richtung R nach außen hin durch eine die Bodenkontaktoberfläche bildende radial äußere Oberfläche 15 begrenzt.

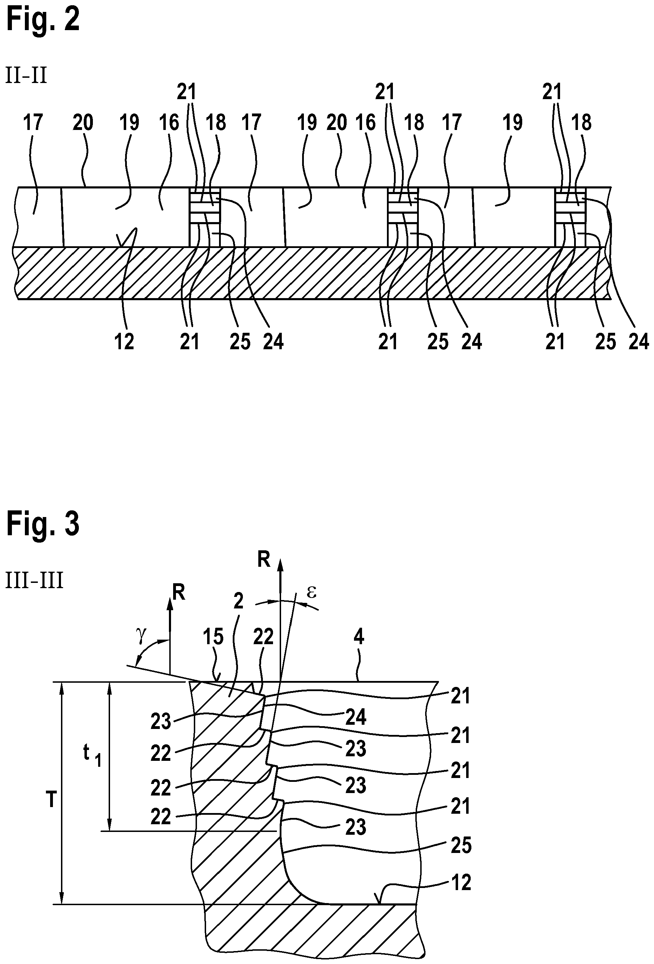

Die Umfangsrillen 3, 5 und 7 sind in radialer Richtung R nach innen hin jeweils durch einen über den gesamten Umfang des Fahrzeugluftreifens erstreckten Rillengrund begrenzt. So ist beispielsweise die Umfangsrille 3 -wie in Fig.2 und Fig.3 dargestellt ist - in radialer Richtung R nach innen hin durch einen Rillengrund 12 begrenzt. Axial beiderseits des Rillengrundes ist die jeweilige Umfangsrille 3, 5 bzw. 7 jeweils von einer Rillenwand begrenzt, welche die jeweils zur Umfangsrille 3,5,7 gerichtete Rippenflanke der die Umfangsrille 3,5,7 zu dieser Seite hin begrenzenden Umfangsrippe bildet.

So ist die Umfangsrippe 2 zur Umfangsrille 3 hin durch eine über den gesamten Umfang des Fahrzeugluftreifens erstreckte Rippenflanke 13 und die Umfangsrippe 4 zur Umfangsrille 3 hin durch eine über den gesamten Umfang des Fahrzeugluftreifens erstreckte Rippenflanke 14 begrenzt. Wie in den Figuren 2 bis 4 dargestellt ist, erstreckt sich die Rippenflanke 13 dabei ausgehend vom Rillengrund 12 der Umfangsrille 3 in radialer Richtung R nach außen hin bis zur radial äußeren Oberfläche 15 der Umfangsrippe 2. Die Rippenflanke 14 erstreckt sich ausgehend vom Rillengrund 12 der Umfangsrille 3 in radialer Richtung R nach außen hin bis zur radial äußeren Oberfläche 15 der Umfangsrippe 4.

Längs der Erstreckung der Umfangsrillen 3 sind in der Rippenflanke 13 über den Umfang des Fahrzeugluftreifens verteilt hintereinander angeordnete Einbuchtungen 16 ausgebildet. Dabei sind jeweils zwei hintereinander angeordnete Einbuchtungen 16 durch einen geradlinig in Umfangsrichtung U des Fahrzeugluftreifens erstreckt ausgebildeten Zwischenabschnitt 17 der Rippenflanke 13 voneinander beabstandet angeordnet sind. Die Rippenflanke 13 bildet in einer Einbuchtung 16 dabei jeweils zwei hintereinander angeordnete Flankenabschnitte der Einbuchtung 16, nämlich den Abschnitt einer ersten Flanke 18 und den Abschnitt einer zweiten Flanke 19 der Einbuchtung 16. Der Abschnitt der ersten Flanke 18 erstreckt sich dabei ausgehend vom Rillengrund 12 der Umfangsrille 3 in radialer Richtung R bis zur radial äußeren Oberfläche 15 der Umfangsrippe 2. Ebenso erstreckt sich der Abschnitt der zweiten Flanke 19 der Einbuchtung 16 ausgehend vom Rillengrund 12 in radialer Richtung R nach außen bis zur radial äußeren Oberfläche 15 der Umfangsrippe 2. In Drehrichtung D bei Vorwärtsfahrt ist in jeder Einbuchtung 16 jeweils die zweite Flanke 19 der ersten Flanke 18 nachgeordnet positioniert.

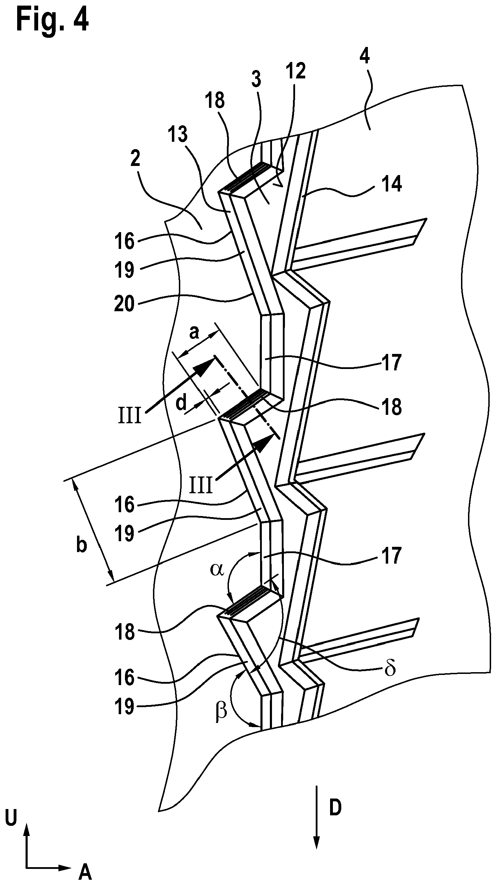

Wie in Fig.4 zu erkennen ist, schneiden sich jeweils die zweite Flanke 19 und die erste Flanke 18 einer Einbuchtung 16 längs ihrer gesamten radialen Erstreckung und bilden in jeder radialen Position in der jeweiligen Schnittebene senkrecht zur radialen Richtung R einen V-förmigen Schnittkonturverlauf. Ein derartiger V-förmiger Schnittkonturverlauf der beiden Flanken 18 und 19 ist auch in der radial äußeren Oberfläche 15 gebildet. In der radial äußeren Oberfläche 15 bildet dabei die Schnittkonturlinie 20 der Flanke 13 im Erstreckungsbereich der ersten Flanke 18 der Einbuchtung 16 jeweils den einen Schenkel der V-förmigen Schnittkonturlinie der beiden Flanken 18 und 19 mit der radial äußeren Oberfläche 15 mit einer Schenkellänge a und im Erstreckungsbereich der zweiten Flanke 19 der Einbuchtung 16 den zweiten Schenkel der V-förmigen Schnittkonturlinie der beiden Flanken 18 und 19 mit der radial äußeren Oberfläche 15 mit einer Schenkellänge b mit b > a.

Der Schenkel mit der Schenkellänge a im Bereich der ersten Flanke 18 ist dabei längs seiner Erstreckung zwischen dem Schnittpunkt mit der Flanke 19 bis zum Schnittpunkt mit dem in Drehrichtung D vorgeordneten Zwischenabschnitt 17 geradlinig erstreckt ausgebildet, wobei seine Erstreckungsrichtung mit einer größeren Erstreckungsrichtungskomponente in axialer Richtung A als in Umfangserstreckungsrichtung U ausgerichtet ist. Der Schenkel mit der Schenkellänge b im Bereich der zweiten Flanke 19 ist längs seiner Erstreckung zwischen dem Schnittpunkt mit der Flanke 18 bis zum Schnittpunkt mit dem in Drehrichtung D nachfolgend angeordneten Zwischenabschnitt 17 geradlinig erstreckt ausgebildet, wobei seine Erstreckungsrichtung mit einer größeren Erstreckungsrichtungskomponente in Umfangserstreckungsrichtung U als in axialer Richtung A ausgerichtet ist.

Wie in Fig. 4 dargestellt ist, schließen der Schenkel der Schenkellänge a und der in Drehrichtung D unmittelbar vorgeordnet angeordnete Zwischenabschnitt 17 in der radial äußeren Oberfläche 15 einen Winkel α ein mit 100° ≤ α ≤ 150°. Beispielsweise ist α=122°. Der erste Schenkel mit der Schenkellänge a schließt mit dem zweiten Schenkel mit der Schenkellänge b einer Einbuchtung 16 in der radial äußeren Oberfläche 15 einen Winkel δ ein mit 80° ≤ δ ≤ 130°. Der zweite Schenkel der Schenkellänge b schließt mit dem in Drehrichtung D unmittelbar nachgeordnet angeordneten Zwischenabschnitt 17 in der radial äußeren Oberfläche 15 einen Winkel β mit 130° ≤ β ≤ 165° ein.

Wie in den Figuren 2, 4 und 5 zu erkennen ist, erstreckt sich die zweite Flanke 19 der Einbuchtung 16 dabei längs ihrer gesamten Erstreckung in Umfangsrichtung U in allen senkrecht zum Schenkel der Schenkellänge b gebildeten Schnittebenen jeweils ausgehend vom Rillengrund 12 über ihre gesamte radiale Erstreckung hinweg bis zur radial äußeren Oberfläche 15 mit einem stetigen, weitgehend geradlinigen in radialer Richtung R ausgerichteten Erstreckungsverlauf der Schnittkontur.

Die erste Flanke 18 der Einbuchtung 16 ist längs ihrer axialen Erstreckung ausgehend von der Schnittkante der ersten Flanke 18 mit dem in Drehrichtung D vorgeordneten Zwischenabschnitt 17 in Richtung zur zweiten Flanke 19 der Einbuchtung 16 bis in eine Position im Abstand d von der zweiten Flanke jeweils aus einem radial äußeren Erstreckungsabschnitt 24 und einem radial inneren Erstreckungsabschnitt 25 ausgebildet. Der radial äußere Erstreckungsabschnitt 24 erstreckt sich ausgehend von der radial äußeren Oberfläche 15 in radialer Richtung R nach innen bis in eine in radialer Richtung R gemessene Tiefe t₁ mit (0,5 T) ≤ t₁ ≤ T. In dieser Tiefe t₁ schließt sich der radial innere Erstreckungsabschnitt 25 in radialer Richtung nach innen hin unmittelbar an den radial äußeren Erstreckungsabschnitt 24 an und erstreckt sich nach radial innen bis zum Rillengrund 12. Die Tiefe T ist die von der radial äußeren Oberfläche 15 in radialer Richtung R nach innen hin bis zum Rillengrund 12 gemessene Rillentiefe.

Im radial äußeren Erstreckungsabschnitt 24 ist - wie in Fig. 3 dargestellt ist - die erste Flanke 19 der Einbuchtung 16 in den senkrecht zum Schenkel der Schenkellänge a gebildeten Schnittebenen jeweils längs ihrer radialen Erstreckung mit einem zick-zackförmigen Schnittkonturverlauf mit N Zacken der Zick-Zack-Form ausgebildet, wobei die Zackenzahl N eine ganze Zahl mit 3 ≤ N ≤ 8 ist. Im dargestellten Ausführungsbeispiel ist N = 4 gewählt.

Jede Zacke ist dabei aus einem radial äußeren kurzen ersten Abschnitt 22, welche die radial äußere Zackenflanke ist, und einem radial inneren langen Abschnitt 23, welche die radial innere Zackenflanke ist, des Schnittkonturverlaufs gebildet, wobei die Rippenflanke 19 in diesem Erstreckungsabschnitt der ersten Flanke 18 der Ausbuchtung 16 - wie in Fig. 3 zu erkennen ist - in den radial äußeren Abschnitten 22 jeweils einen Neigungswinkel γ zur radialen Richtung R und in den radial inneren Abschnitten 23 jeweils einen Neigungswinkel ε zur radialen Richtung R einschließt. Der Winkel γ ist dabei mit 70°≤γ<90° und der Winkel ε mit 0°<ε≤45° gewählt, beispielsweise ist ε = 15° und γ = 75° gewählt. Längs der radialen Erstreckung von radial innen nach radial außen hin ist dabei die erste Flanke 18 im Bereich des radial inneren Abschnittes 23 einer Zacke 21 jeweils von der Rippe 2 wegweisend geneigt und im radial äußeren Abschnitt 22 zur Rippe 2 hinweisend geneigt ausgerichtet. Die Neigung der beiden eine Zacke 21 bildenden Abschnitte 22 und 23 ist somit mit entgegengesetzter Neigungsrichtung gewählt.

Wie in Fig. 3 dargestellt ist, ist in einem Ausführungsbeispiel im radial äußeren Erstreckungsabschnitt 24 die radial am weitesten außen positionierte Zacke 21 mit einem in radialer Richtung R gemessenen Abstand zwischen radial äußerem Abschnitt 22 der Zacke 21 und der radial äußeren Oberfläche 15 ausgebildet, welcher maximal der Hälfte der in radialer Richtung R gemessenen Erstreckungshöhe h der Zacke 21 entspricht.

Im radial inneren Erstreckungsabschnitt 25 ist - wie in Fig. 3 dargestellt ist - die erste Flanke 19 der Einbuchtung 16 in den senkrecht zum Schenkel der Schenkellänge a gebildeten Schnittebenen jeweils längs ihrer radialen Erstreckung mit einem stetigen im Wesentlichen geradlinig erstreckten Schnittkonturverlauf und im Übergang zum Rillengrund 12 abgerundet ausgebildet.

Eine derartige Abrundung ist auch im Übergang zwischen den zweiten Flanken 19 zum Rillengrund 12 ausgebildet.

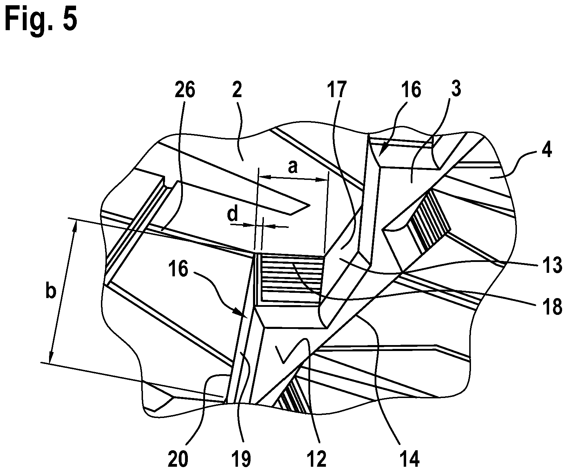

Wie in den Figuren 5 und 4 zu erkennen ist, ist die erste Flanke 18 in dem schmalen Erstreckungsabschnitt der Erstreckungslänge d, welcher sich bis zur zweiten Flanke 19 erstreckt, die erste Flanke 18 in den senkrecht zum Schenkel der Schenkellänge a gebildeten Schnittebenen jeweils längs ihrer radialen Erstreckung vom Rillengrund bis zur radial äußeren Oberfläche 15 mit einem stetigen im Wesentlichen geradlinig erstreckten Schnittkonturverlauf und im Übergang zum Rillengrund 12 abgerundet ausgebildet.

Der Abstand d ist mit 0,2mm≤d≤1mm, beispielsweise mit d = 0,5mm ausgebildet. Die Schenkellänge a ist mit 2mm ≤ a ≤ 15mm und die Schenkellänge b mit 3mm ≤ b ≤ 30mm ausgebildet.

Die Rippenflanke 14 der Umfangsrippe 4 ist - wie in den Figuren 4 und 5 dargestellt ist, zick-zack-förmig aus zwei Erstreckungsabschnitten ausgebildet, wobei die beiden Erstreckungsabschnitte jeweils V-förmige Einbuchtungen bilden, die analog zu den Einbuchtungen 16 ausgebildet sind. Auch in diesem dargestellten Ausführungsbeispiel ist die kürzere Flanken einer Einbuchtungen der Rippenflanke 14 jeweils der längeren Flanke einer Einbuchtung in Drehrichtung D vorgeordnet angeordnet positioniert. Auch bei den Einbuchtungen der Rippenflanke 14 bilden die längeren Flanken der Einbuchtung in der radial äußeren Oberfläche einen größeren Schenkel der Schenkellänge b einer V-Form und die kürzeren Flanken der Einbuchtung einen kürzeren Schenkel der Schenkellänge a der V-Form. Der längere Schenkel ist in mit einer größeren Richtungskomponente in Umfangsrichtung U als in axialer Richtung A ausgerichtet. Der kürzere Schenkel ist mit einer größeren Richtungskomponente in axialer Richtung A als in Umfangsrichtung U ausgerichtet. Dabei ist auch bei diesem Ausführungsbeispiel die erste Flanke der Einbuchtung mit kürzerem Schenkel analog zu den ersten Flanken 18 der Einbuchtungen 16 der Rippenflanke 13 in ihrem radial äußeren Erstreckungsabschnitt längs ihrer radialen Erstreckung - analog zu der in Fig. 3 dargestellten und oben beschriebenen Ausbildung - zick-zack-förmig konturiert ausgebildet und die zweite Flanke der Einbuchtung mit längerem Schenkel analog zu den zweiten Flanken 19 längs ihrer gesamten Erstreckung im Wesentlichen stetig verlaufend ausgebildet.

In einem in den Figuren 1,4 und 5 dargestellten Ausführungsbeispiel sind die Einbuchtungen 16 der Rippenflanke 13 und die Einbuchtungen der Rippenflanke 14 in Umfangsrichtung U des Reifens zu einander versetzt positioniert angeordnet.
In einem weiteren in Fig.1 dargestellten Ausführungsbeispiel ist die Umfangsrille 7 in analoger Weise zur Umfangsrille 3 ausgebildet, wobei jedoch die ersten Flanken der jeweiligen Einbuchtungen in den Rippenflanken der Rippen 8 und 6 jeweils in die in Drehrichtung D den zweiten Flanken der jeweiligen Einbuchtung nachgeordnet angeordnet sind. Auf diese Weise sind in beide Drehrichtungen jeweils erste Flanken von Einbuchtungen ihren zweiten Flanken nachgeordnet.

Fig. 5 zeigt ein weiteres Ausführungsbeispiel, bei welchem am Beispiel der Umfangsrille 3 und der Umfangsrippe 2 dargestellt in den Umfangsrippen zusätzliche Feineinschnitte 26 ausgebildet sind, welche sich im Wesentlichen in axialer Richtung A des Fahrzeugluftreifens erstrecken. Dabei mündet jeweils ein Feineinschnitt 26 in der radial äußeren Oberfläche 15 der Umfangsrippe 2 in der Position des Schnitts der ersten Flanke 18 mit der zweiten Flanke 19 in die Einbuchtung 16.

Die Feineinschnitte 26 sind in bekannter Weise mit einer in radialer Richtung R gemessenen Einschnittstiefe von 1 mm bis 4 mm ausgebildet.

### Bezugszeichenliste (Teil der Beschreibung)

- 1: Profilblockreihe
- 2: Umfangsrippe
- 3: Umfangsrille
- 4: Profilblockelement
- 5: Umfangsrippe
- 6: Umfangsrille
- 7: Umfangsrippe
- 8: Umfangsrippe
- 9: Profilblockreihe
- 10: Umfangsrille
- 11: Umfangsrille
- 12: Rillengrund
- 13: Rippenflanke
- 14: Rippenflanke
- 15: Radial äußere Oberfläche
- 16: Einbuchtung
- 17: Zwischenabschnitt
- 18: Erste Flanke
- 19: Zweite Flanke
- 20: Schnittkonturline
- 21: Zacken
- 22: Erster Abschnitt
- 23: Zweiter Abschnitt
- 24: Radial äußerer Erstreckungsabschnitt
- 25: Radial innerer Erstreckungsabschnitt
- 26: Feineinschnitt

## Patentansprüche

1. Laufstreifenprofil eines Fahrzeugreifens mit wenigstens zwei axial nebeneinander angeordneten Profilbändern (2,4) die durch eine Umfangsille (3) voneinander getrennt sind, wobei die Umfangsrille (3) in radialer Richtung R nach innen hin von einem Rillengrund (12) begrenzt wird und wobei das Profilband (2) in radialer Richtung R nach außen hin durch eine die Bodenkontaktfläche bildende, radial äußere Oberfläche (15) und in axialer Richtung A zur Umfangsrille (3) hin durch eine eine Rillenwand der Umfangsrille (3) bildende Profilbandflanke (13) begrenzt ist, welche sich ausgehend vom Rillengrund (12) in radialer Richtung R nach außen bis zur radial äußeren Oberfläche (15) und entlang der Umfangsrille (3) in Umfangsrichtung U erstreckt, wobei die Profilbandflanke (13) längs ihrer Erstreckung in Umfangsrichtung U mit mehreren jeweils hintereinander angeordneten Einbuchtungen (16) ausgebildet ist, welche jeweils aus mehreren - insbesondere zwei - in Umfangsrichtung U unmittelbar hintereinander ausgebildeten Flankenabschnitten (18,19) ausgebildet sind, die sich längs ihrer radialen Erstreckung ausgehend von der radial äußeren Oberfläche (15) nach innen hin v-förmig schneiden, wobei die erste Flanke (18) die Einbuchtung (16) zur einen Drehrichtung des Reifens hin und die zweite Flanke (19) die Einbuchtung (16) zur anderen Drehrichtung des Reifens hin begrenzt, wobei in der radial äußeren Oberfläche (15) die erste Flanke (18) den ersten Schenkel der Schenkellänge a und die zweite Flanke (19) den zweiten Schenkel der Schenkellänge b der V-Form bildet, wobei der zweite Schenkel in seiner Ausrichtung mit einer größeren Umfangsrichtungskomponente als der erste Schenkel und a < b ausgebildet ist, wobei die erste Flanke (18) in senkrecht zum ersten Schenkel gebildeten Schnittebenen längs ihrer radialen Erstreckung von der radial äußeren Oberfläche (15) nach innen hin zumindest abschnittsweise mit zickzackförmiger Schnittkontur mit alternierend angeordneten ersten (22) und zweiten (23) Abschnitten ausgebildet ist, **dadurch gekennzeichnet, dass** die Schnittkontur längs ihrer radialen Erstreckung von außen nach innen hin in den ersten Abschnitten (22) eine entgegengesetzte Neigungsrichtung aufweist wie in den zweiten Abschnitten (23), und
dass die zweite Flanke (19) in den senkrecht zum zweiten Schenkel gebildeten Schnittebenen längs ihrer radialen Erstreckung von der radial äußeren Oberfläche (15) nach innen hin mit einem stetigen Konturverlauf ausgebildet ist.

2. Laufstreifenprofil gemäß den Merkmalen von Anspruch 1,
wobei die Schnittkontur in den zweiten Abschnitten (23) eine größere radiale Erstreckung aufweist als in den ersten Abschnitten (22), und
wobei die Schnittkontur in den zweiten Abschnitten (23) längs ihrer radialen Erstreckung von innen nach außen hin unter Einschluss eines Neigungswinkels ε zur Radialen R jeweils mit zum Profilband (2) hin orientierter Neigungsrichtung und in den ersten Abschnitten (22) längs ihrer radialen Erstreckung von innen nach außen hin unter Einschluss eines Neigungswinkels γ zur Radialen R jeweils mit zum Profilband (2) hin orientierter Neigungsrichtung ausgebildet ist mit γ > ε.

3. Laufstreifenprofil gemäß den Merkmalen von Anspruch 2,
wobei ε mit 0°<ε≤45° ausgebildet ist.

4. Laufstreifenprofil gemäß den Merkmalen von Anspruch 2 oder 3,
wobei γ mit 70°≤γ<90° ausgebildet ist.

5. Laufstreifenprofil gemäß den Merkmalen von einem oder mehreren der vorangegangenen Ansprüche,
wobei die in der ersten Flanke (18) ausgebildete zickzackförmige Schnittkontur mit N jeweils aus einem ersten Abschnitt (22) und einem anschließenden zweiten Abschnitt (23) ausgebildeten Zacken ausgebildet, wobei N eine ganze Zahl ist mit 3≤N≤8.

6. Laufstreifenprofil gemäß den Merkmalen von einem oder mehreren der vorangegangenen Ansprüche,
wobei die erste Flanke (18) ausgehend von ihrer Schnittkante mit der zweiten Flanke (19) längs ihrer Erstreckung bis in einen Abstand d mit 0,2mm ≤ d ≤ 1mm von dieser Schnittkante in den jeweils senkrecht zum ersten Schenkel gebildeten Schnittebenen mit stetigem Schnittkonturverlauf ausgebildet ist und im Anschluss daran bis zu ihrer Schnittkante mit der Profilbandflanke (12) in den senkrecht zum ersten Schenkel gebildeten Schnittebenen längs ihrer radialen Erstreckung von der radial äußeren Oberfläche (15) nach innen hin zumindest abschnittsweise mit zickzackförmiger Schnittkontur ausgebildet ist.

7. Laufstreifenprofil gemäß den Merkmalen von einem oder mehreren der vorangegangenen Ansprüche,
wobei die in Umfangsrichtung U benachbart hintereinander angeordneten Einbuchtungen (16) jeweils beabstandet voneinander angeordnet sind.

8. Laufstreifenprofil gemäß den Merkmalen von einem oder mehreren der vorangegangenen Ansprüche,
wobei das Profilband (2) eine Umfangsrippe ist.

9. Laufstreifenprofil gemäß den Merkmalen von einem oder mehreren der vorangegangenen Ansprüche,
wobei in der radial äußeren Oberfläche (15) des Profilbandes (2) ein Feineinschnitt (26) ausgebildet ist, welcher in der Schnittposition des ersten Schenkels mit dem zweiten Schenkel in die Einbuchtung (16) mündet.

## Claims

1. Tread profile of a vehicle tyre with at least two profile strips (2, 4), which are arranged axially next to one another and are separated from one another by a circumferential groove (3), wherein the circumferential groove (3) is delimited inwardly in the radial direction R by a groove base (12) and wherein the profile strip (2) is delimited outwardly in the radial direction R by a radially outer surface (15), which forms the ground contact surface, and in the axial direction A towards the circumferential groove (3) by a profile strip flank (13), which forms a groove wall of the circumferential groove (3) and extends in the radial direction R outwards from the groove base (12) to the radially outer surface (15) and extends in the circumferential direction U along the circumferential groove (3), wherein the profile strip flank (13) is formed along its extent in the circumferential direction U by a number of indentations (16), which are respectively arranged one behind the other and are formed in each case by a number of - in particular two - flank portions (18, 19), which are formed directly one behind the other in the circumferential direction U and, along their radial extent from the radially outer surface (15) inwards, intersect in a v-shaped manner, wherein the first flank (18) delimits the indentation (16) in relation to one rolling direction of the tyre and the second flank (19) delimits the indentation (16) in relation to the other rolling direction of the tyre, wherein, in the radially outer surface (15), the first flank (18) forms the first leg of the leg length a and the second flank (19) forms the second leg of the leg length b of the V shape, wherein the second leg is formed with a greater circumferential direction component in its alignment than the first leg and a < b, wherein, in sectional planes formed perpendicularly to the first leg, the first flank (18) is formed along its radial extent from the radially outer surface (15) inwards at least in certain portions with a zigzag-shaped sectional contour with alternately arranged first (22) and second (23) portions,
**characterized**
**in that** the sectional contour has along its radial extent from the outside inwards an opposite direction of inclination in the first portions (22) than in the second portions (23), and
**in that**, in the sectional planes formed perpendicularly to the second leg, the second flank (19) is formed along its radial extent from the radially outer surface (15) inwards with a continuous contour profile.

2. Tread profile according to the features of Claim 1, wherein the sectional contour has a greater radial extent in the second portions (23) than in the first portions (22), and
wherein the sectional contour is formed in the second portions (23) in each case with a direction of inclination oriented with respect to the profile strip (2) along their radial extent from the inside outwards to include an angle of inclination ε in relation to the radial R and is formed in the first portions (22) in each case with a direction of inclination oriented with respect to the profile strip (2) along their radial extent from the inside outwards to include an angle of inclination γ in relation to the radial R, with γ > ε.

3. Tread profile according to the features of Claim 2, wherein ε is formed with 0° < ε ≤ 45°.

4. Tread profile according to the features of Claim 2 or 3,
wherein γ is formed with 70° ≤ γ < 90°.

5. Tread profile according to the features of one or more of the preceding claims,
wherein the zigzag-shaped sectional contour formed in the first flank (18) is formed with N zigs and zags respectively formed by a first portion (22) and an adjoining second portion (23), where N is a whole number and with 3 ≤ N ≤ 8.

6. Tread profile according to the features of one or more of the preceding claims,
wherein the first flank (18) is formed along its extent from its intersecting edge with the second flank (19) up to a distance d, with 0.2 mm ≤ d ≤ 1 mm from this intersecting edge with a continuous sectional contour profile in the sectional planes respectively formed perpendicularly to the first leg and, following that, up to its intersecting edge with the profile strip flank (12), is formed along its radial extent from the radially outer surface (15) inwards at least in certain portions with a zigzag-shaped sectional contour in the sectional planes formed perpendicularly to the first leg.

7. Tread profile according to the features of one or more of the preceding claims,
wherein the indentations (16) arranged adjacently one behind the other in the circumferential direction U are respectively arranged spaced apart from one another.

8. Tread profile according to the features of one or more of the preceding claims,
wherein the profile strip (2) is a circumferential rib.

9. Tread profile according to the features of one or more of the preceding claims,
wherein a sipe (26), which opens out into the indentation (16) in the intersecting position of the first leg with the second leg, is formed in the radially outer surface (15) of the profile strip (2).

## Revendications

1. Profil de bande de roulement pour bandage de roue de véhicule, présentant au moins deux bandes profilées (2, 4) disposées axialement l'une à côté de l'autre et séparées l'une de l'autre par une rainure périphérique (3), la rainure périphérique (3) étant limitée vers l'intérieur dans la direction radiale R par un fond de rainure (12), la bande profilée (2) étant limitée vers l'extérieur dans la direction radiale R par une surface radiale extérieure (15) formant la surface de contact avec le sol et dans la direction axiale A vers la rainure périphérique (3) par un flanc (13) de bande profilée qui forme une paroi de la rainure périphérique (3), qui part du fond (12) de la rainure vers l'extérieur dans la direction radiale R jusqu'à la surface radiale extérieure (15) et le long de la rainure périphérique (3) dans la direction périphérique U,
le flanc (13) de bande profilée étant configuré le long de son extension dans la direction périphérique (U) avec plusieurs encoches (16) disposées les unes derrière les autres et dont chacune desquelles est formée de plusieurs et en particulier deux sections de flanc (18, 19) formées directement l'une à la suite de l'autre dans la direction périphérique et qui se coupent en forme de V partant de la surface radiale extérieure (15) et le long de leur extension radiale en direction de l'intérieur, le premier flanc (18) délimitant l'encoche (16) dans un sens de rotation du bandage de roue et le deuxième flanc (19) délimitant l'encoche (16) dans l'autre sens de rotation du bandage de roue, le premier flanc (18) formant dans la surface radiale extérieure (15) la première branche de longueur a et le deuxième flanc (19) formant la deuxième branche de longueur b de la forme en V, la deuxième branche étant orientée avec une composante plus grande dans la direction périphérique que la première branche et a < b,
le premier flanc (18) étant configuré dans des plans de coupe formés perpendiculairement à la première branche et dans son extension radiale avec un contour de coupe en zigzag présentant en alternance des premières sections (22) et des deuxièmes sections (23) depuis la surface radiale extérieure (15) et vers l'intérieur,
**caractérisé en ce que**
le long de son extension radiale de l'extérieur vers l'intérieur, le contour de coupe présente dans les premières sections (22) une orientation opposée à celle des deuxièmes sections (23) et
**en ce que** dans les plans de coupe formés perpendiculairement à la deuxième branche, le deuxième flanc (19) est configuré avec une évolution continue de son contour le long de son extension radiale vers l'intérieur depuis la surface radiale extérieure (15).

2. Profil de bande de roulement selon les caractéristiques de la revendication 1, dans lequel le contour de coupe des deuxièmes sections (23) présenté une extension radiale plus grande que dans les premières sections (22), le contour de coupe formant dans les deuxièmes sections (23) le long de leur extension radiale de l'intérieur vers l'extérieur un angle d'inclinaison ε par rapport à la radiale R, chaque fois avec une inclinaison orientée vers la bande profilée (2) et dans les premières sections (22), le long de leur extension radiale de l'intérieur vers l'extérieur, un angle d'inclinaison γ par rapport à la radiale R, chaque fois avec une inclinaison orientée vers la bande profilée (2), avec γ > ε.

3. Profil de bande de roulement selon les caractéristiques de la revendication 2, dans lequel ε vérifie la relation 0° < ε ≤ 45°.

4. Profil de bande de roulement selon les caractéristiques des revendications 2 ou 3, dans lequel γ vérifie la relation 70° ≤ γ < 90°.

5. Profil de bande de roulement selon les caractéristiques d'une ou plusieurs des revendications précédentes, dans lequel le contour de coupe en zigzag formé dans le premier flanc (18) présente une branche constituée d'une première section (22) et ensuite d'une deuxième section (23), N étant un nombre entier vérifiant la relation 3 ≤ N ≤ 8.

6. Profil de bande de roulement selon les caractéristiques d'une ou plusieurs des revendications précédentes, dans lequel partant de son bord de coupe avec le deuxième flanc (19), le premier flanc (18) présente une évolution continue de son contour de coupe le long de son extension jusqu'à des plans de coupe formés à une distance d, 0,2 mm ≤ d ≤ 1 mm, de ce bord de coupe dans les plans de coupe formés perpendiculairement la première branche, et présente ensuite au moins en partie un contour de coupe en zigzag jusqu'à son bord de coupe avec le flanc (12) de la bande profilée, dans les plans de coupe formés perpendiculairement à la première branche, le long de son extension radiale vers l'intérieur depuis la surface radiale extérieure (15).

7. Profil de bande de roulement selon les caractéristiques d'une ou plusieurs des revendications précédentes, dans lequel les encoches (16) disposées les unes derrière les autres dans la direction périphérique sont toutes disposées à distance les unes des autres.

8. Profil de bande de roulement selon les caractéristiques d'une ou plusieurs des revendications précédentes, dans lequel la bande profilée (2) est une nervure périphérique.

9. Profil de bande de roulement selon les caractéristiques d'une ou plusieurs des revendications précédentes, dans lequel une fine entaille (26) qui débouche dans l'encoche (16) dans la position de coupe de la première branche avec la deuxième branche est formée dans la surface radiale extérieure (15) de la bande profilée (2).
